# EUROPÄISCHE PATENTANMELDUNG

(11) **EP 1 286 063 A1**
(43) Veröffentlichungstag der Anmeldung: **26.02.2003**
(21) Anmeldenummer: 02001640.8
(22) Anmeldetag: 24.01.2002
(51) Int. Cl.: F16B 37/06

(54) **Selbstlochendes, verdreh- und auspressicher in ein Blech einpressbares Befestigungselement**

(30) Priorität: 22.08.2001 DE 20113853 U
(71) Anmelder: TEXTRON VERBINDUNGSTECHNIK GmbH & Co. OHG, 56567 Neuwied (DE)
(72) Erfinder: Ross, Gerold, Dipl.-Ing., 56170 Bendorf (DE); Ludwig, Detlef, 97996 Niederstetten (DE)
(74) Vertreter: Beck, Alexander

(57) **Zusammenfassung**

Selbstlochendes, verdreh- und auspresssicher in ein Blechteil (40) einpressbares Befestigungselement (10) mit einem ringförmigen Körper, dessen dem Blech zugewandte Seite radial angeordnete Noppen (15, 25) aufweist, die sich beim Einpressen in das Blechteil (40) eindrücken und damit das Befestigungselement (10) gegen Verdrehen sichern, wobei in der Mitte ein Innengewinde (11) angeordnet ist und auf der im gesetzten Zustand dem Blechteil (40) zugewandten Seite eine ringförmige Vertiefung (12) vorgesehen ist, in die das beim Setzen verdrängte Blechmaterial eingepresst wird.

## Beschreibung

Die vorliegende Erfindung betrifft ein selbstlochendes, verdreh- und auspresssicher in ein Blech einpressbares Befestigungselement mit einem ringförmigen Körper, dessen dem Blech zugewandte Seite radial angeordnete Noppen aufweist, die sich beim Einsetzen in das Blech in dessen Oberfläche eindrücken und in dessen Mitte ein Innengewinde angeordnet ist, und das im gesetzten Zustand auf der dem Blech zugewandten Seite des ringförmigen Körpers eine umlaufende ringförmige Vertiefung aufweist, in die das beim Setzen verdrängte Blechmaterial eingepresst wird.

Es ist die Aufgabe der vorliegenden Erfindung, ein solches Befestigungselement dergestalt zu entwickeln, dass es bei gleicher Geometrie in einem maximalen Blechdickenbereich mit hoher Verdreh- und Auspresssicherheit eingesetzt werden kann, ohne dass ein vorheriges Lochen und eine besondere Vorbereitung der Löcher, in die das Befestigungselement eingesetzt werden soll, erforderlich ist.

Gemäß dem Stand der Technik ist man bei bisherigen Lösungen davon ausgegangen, dass eine bestmögliche Verdreh- und Auspresssicherheit und Anwendungsbreite des Befestigungselementes dann erreicht wird, wenn zur Verriegelung gegen Verdrehen durchgehende Stege innerhalb der ringförmigen Vertiefung angeordnet werden und der Boden der ringförmigen Vertiefung parallel mit der zu verarbeitenden Blechoberfläche ausgebildet wird.

Dem gegenüber geht die vorliegende Erfindung davon aus, dass - zum Erreichen einer optimalen Verdrehsicherheit - noppenförmige Verriegelungselemente in einem maximalen Abstand zur Mittelachse angebracht sind und damit der wirkungsvollste Hebelarm gegen das Verdrehmoment am äußeren Stützkragen der ringförmigen Vertiefung genutzt wird.

Eine weiterer Vorteil der erfindungsgemäßen Lösung besteht darin, dass mit der Verlagerung der Verdrehsicherung, wie vorher beschrieben, und der geneigten Ausbildung des Bodens der ringförmigen Vertiefung an der inneren Begrenzung der ringförmigen Vertiefung - dem Stanzkragen - mehr Raum für das Eindringen des Schneidringes der Stanzprägematrize zur Verfügung steht, damit ist es möglich, große Blechdicken bzw. größere Blechdickenbereiche mit der erfindungsgemäßen Lösung zu verarbeiten.

Die erfindungsgemäße Abstimmung zwischen Stanzmatrizengeometrie und Ausführung der ringförmigen Vertiefung und der Art der Verdrehsicherung gewährleistet, dass nach dem Einpressen des Blechmaterials ein Festklemmen auf der Stanzprägematrize verhindert wird und damit eine sehr hohe Verarbeitungssicherheit gewährleistet wird.

In die bei der Fertigung der Teile erzeugten Hinterschnitte, sowohl am inneren Stanzkragen als auch am Stützkragen der ringförmigen Vertiefung, wird beim Einpressen der Teile Blechmaterial eingeformt, damit wird sichergestellt, dass auch bei der Verarbeitung in dünnen Blechen eine hohe Verdreh- und Auspresssicherheit des Befestigungselementes erreicht wird.

Die Ausbildung der Noppen kann sowohl kreisbogenförmig als auch scharfkantig (dreieckig) sein.

Im Folgenden wird die Erfindung anhand von beigefügten Zeichnungen näher erläutert.

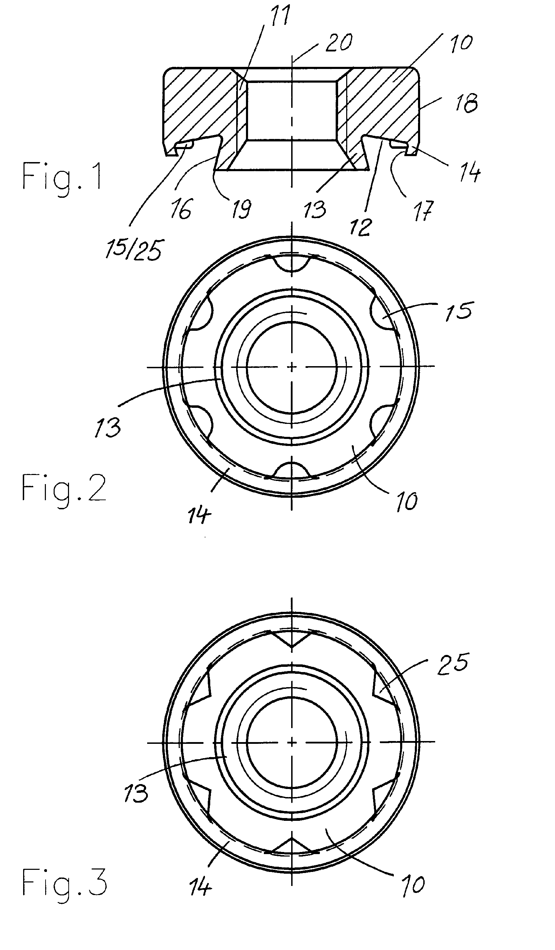

Fig. 1 zeigt ein erfindungsgemäßes Befestigungselement in Mutternform, aus einem ringförmigen Grundkörper (10). Im Zentrum des zylindrischen Befestigungselementes (10) befindet sich eine durchgehende Bohrung, die - zumindest über einen Teil der Höhe des Befestigungselementes (10) - in einem Gewinde (11) ausgebildet ist.

An der Unterseite ist das erfindungsgemäße Befestigungselement (10) mit einer ringförmigen Vertiefung (12) versehen, deren Bodenfläche von ihrer inneren Begrenzung - dem Stanzkragen (13) - zu ihrer äußeren Begrenzung - dem Stützkragen (14) - geneigt verlaufend ausgeführt ist. Innerhalb dieser ringförmigen Vertiefung (12) sind am äußeren Stützkragen (14) noppenförmige Verriegelungselemente (15) in regelmäßigem Abstand kreisförmig angebracht. Der Stanzkragen (13) ist mit einem Hinterschnitt (16) zur Achse (20) des erfindungsgemäßen Befestigungselementes (10) versehen und der Stützkragen (14) ist mit einem Hinterschnitt (17) zur äußeren Mantelfläche (18) des erfindungsgemäßen Befestigungselementes (10) versehen. Der Stanzkragen (13) ist mit einer Schneidkante (19) ausgebildet.

Fig. 2 zeigt das erfindungsgemäße Befestigungselement (10) der Fig. 1 von der Unterseite dargestellt. Die Form und Anordnung der noppenförmigen Verriegelungselemente (15) sind deutlich dargestellt. Die noppenförmigen Verriegelungselemente (15) sind am äußeren Stützkragen (14) angebracht und bilden zum Stanzkragen (13) einen Freiraum. in dieser Darstellung (Fig. 2) ist die Variante mit kreisförmig ausgebildeten noppenförmigen Verriegelungselementen (15) dargestellt.

Fig. 3 zeigt das erfindungsgemäße Befestigungselement (10) in der Ausführung mit scharfkantig (dreieckig) ausgebildeten noppenförmigen Verriegelungselementen (25).

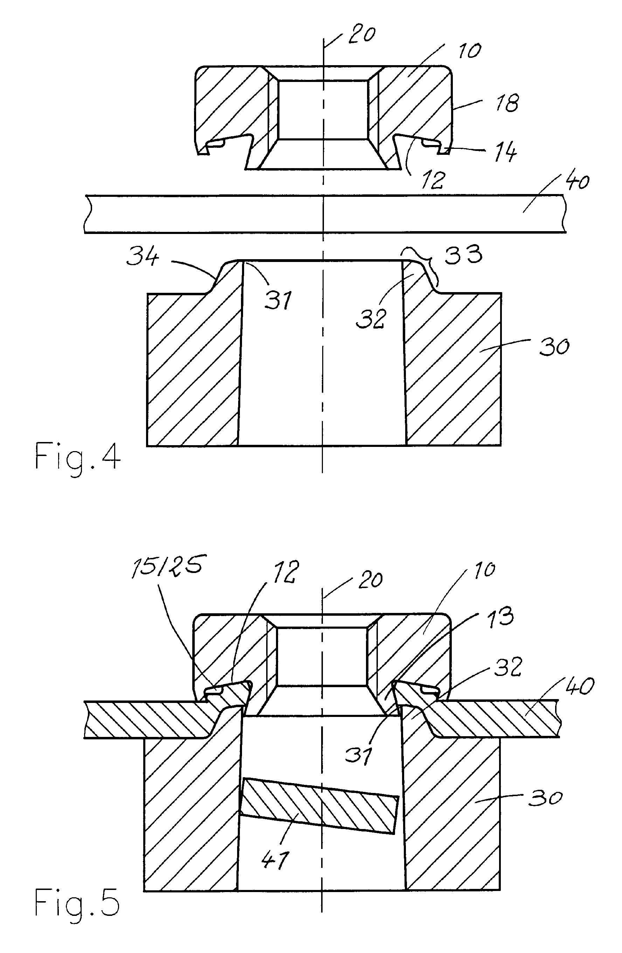

Fig. 4 zeigt das erfindungsgemäße Befestigungselement (10) nach Fig. 1, 2 und 3 sowie die Stanzprägematrize (30) und das Blechteil (40). In dieser Darstellung ist zu erkennen, das dass Blechteil (40) kein vorgefertigtes Loch und auch keine weitere Vorbereitung benötigt. Die Stanzprägematrize (30) ist mit einer Schneidkante (31) sowie mit einem Prägering (32) mit einer speziell ausgebildeten Geometrie (33) ausgeführt. Die äußere Mantelfläche (34) des Prägeringes (32) verläuft konisch zur Mittelachse (20) der Stanzprägematrize (30) Dies gewährleistet, dass nach dem Stanzen und Einpressen des Blechteils (40) in die ringförmige Vertiefung (12) ein Festklemmen des Prägeringes (32) im Blechteil (40) vermieden wird.

Fig. 5 zeigt das erfindungsgemäße Befestigungselement (10) nach Fig. 1 bis 3 kurz nach der Beendigung des Setzvorganges. Vom Stanzkragen (13) wurde im Zusammenwirken mit der Schneidkante (31) der Stanzprägematrize (30) ein Butzen (41) an dem Blechteil (40) ausgestanzt und Material des Blechteils (40) durch den Prägering (32) in die ringförmige Vertiefung (12) unter Umschließung der noppenförmigen Verriegelungselemente (15, 25) eingeformt. Der ausgelochte Butzen (41) wird nach unten aus der Stanzprägematrize (30) entsorgt.

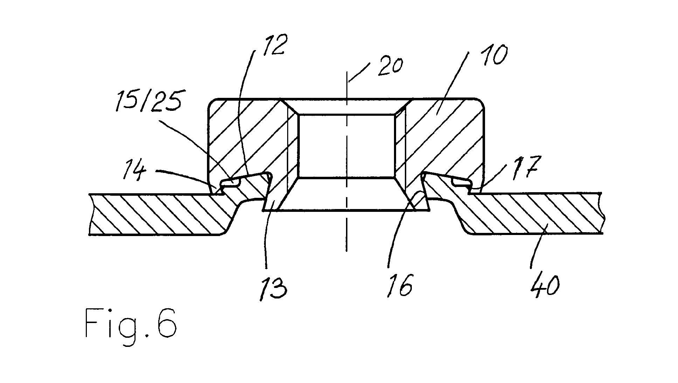

Fig. 6 zeigt das vollständig eingepresste erfindungsgemäße Befestigungselement (10) in einem Blechteil (40). Die Wirkung der Hinterschnitte (16/17) am Stanzkragen (13) und Stützkragen (14) ist deutlich zu erkennen. Die ringförmige Vertiefung (12) ist mit Material des Blechteils (40) gefüllt. Die noppenförmigen Verriegelungselemente (15, 25) sind in das Blechteil (40) eingebettet. Die positive Wirkung der geneigt nach außen verlaufenden Bodenfläche der ringförmigen Vertiefung (12), zur Vergrößerung der Wirkungslängen des Stanzkragens (13) und damit zur Vergrößerung der anwendbaren Blechdickenbereiche für das erfindungsgemäße Befestigungselement (10), ist deutlich zu erkennen.

## Patentansprüche

1. Selbstlochendes, verdreh- und auspresssicher in ein Blechteil (40) einpressbares Befestigungselement (10) mit einem ringförmigen Körper, dessen dem Blech zugewandte Seite, radial angeordnete Noppen (15, 25) aufweist, die sich beim Einpressen in das Blechteil (40) eindrücken und damit das Befestigungselement (10) gegen Verdrehen sichern, wobei in der Mitte ein Innengewinde (11) angeordnet ist, und auf der im gesetzten Zustand dem Blechteil (40) zugewandten Seite eine ringförmige Vertiefung (12) aufweist, in die das beim Setzen verdrängte Blechmaterial eingepresst wird, **dadurch gekennzeichnet, dass** die Noppen (15, 25) gleichmäßig verteilt in dieser ringförmigen Vertiefung (12) am äußeren Rand des die ringförmige Vertiefung (12) begrenzenden Kragens (14) angeordnet sind.

2. Befestigungselement (10) nach Anspruch 1, **dadurch gekennzeichnet, dass** die ringförmige Vertiefung (12) auf der dem Blechteil (40) zugewandten Seite zum Innengewinde (11) hin durch eine kragenförmige Erhebung (13) begrenzt wird, die so ausgebildet ist, dass sie beim Setzen des Befestigungselementes (10) ein Loch mit dem Durchmesser dieses Stanzkragens (13) in das Blechteil (40) stanzt.

3. Befestigungselement (10) nach Anspruch 1 oder 2, **dadurch gekennzeichnet, dass** der Stanzkragen (13) in seiner Höhe der jeweils zu stanzenden Blechdicke des Blechteils (40) angepasst ist.

4. Befestigungselement (10) nach einem der Ansprüche 1 bis 3, **dadurch gekennzeichnet, dass** der Stanzkragen (13) zur ringförmigen Vertiefung (12) mit einem Hinterschnitt (16) versehen ist, in den beim Einpressen entstehendes Blechmaterial aufgenommen wird, um eine Verriegelung des Befestigungselementes (10) gegen ein axiales Ausdrücken zu gewährleisten.

5. Befestigungselement (10) nach einem der Ansprüche 1 bist 4, **dadurch gekennzeichnet, dass** der die ringförmige Vertiefung (12) am äußeren Rand begrenzende Stützkragen (14) zur ringförmigen Vertiefung (12) hin ebenfalls einen Hinterschnitt (17) ausweist, um Blechmaterial zur Verriegelung gegen ein axiales Ausdrücken aufnehmen zu können.

6. Befestigungselement (10) nach einem der Ansprüche 1 bis 5, **dadurch gekennzeichnet, dass** die Grundfläche der ringförmigen Vertiefung (12) von innen nach außen in Richtung des Blechteils (40) geneigt angeordnet ist.
